# FASCICULE DE BREVET EUROPEEN

(11) **EP 1 018 812 B1**
(45) Date de publication et mention de la délivrance du brevet: **19.02.2003**
(21) Numéro de dépôt: 99403318.1
(22) Date de dépôt: 30.12.1999
(51) Int. Cl.: H04B 10/18

(54) **Système de transmission à fibre optique à multiplexage en longueur d'onde avec compensation de la dispersion chromatique**
Faseroptisches WDM Übertragungssystem mit Farbzerstreuungskompensation
Optical fiber WDM transmission system with chromatic dispersion compensation

(30) Priorité: 04.01.1999 FR 9900006
(43) Date de publication de la demande: 12.07.2000
(73) Titulaire: ALCATEL, 75008 Paris (FR)
(72) Inventeur: Rousseau, Jean-Claude, 78400 Chatou (FR)
(74) Mandataire: Lamoureux, Bernard

(56) Documents cités:
- EP-A- 0 877 496
- EP-A- 0 883 002
- US-A- 5 781 673

## Description

La présente invention concerne le domaine des transmissions par fibre optique, et plus particulièrement le domaine des transmissions à multiplexage en longueur d'onde.

Pour des fibres optiques, on qualifie généralement le profil d'indice en fonction de l'allure de la courbe représentative de l'indice de réfraction en fonction du rayon de la fibre. On représente de façon classique sur les abscisses la distance r au centre de la fibre, et sur les ordonnées l'indice de réfraction, défini par sa différence absolue ou en pour cent par rapport à l'indice de la gaine de la fibre. On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une dispersion chromatique cumulée sensiblement nulle sur la liaison, de sorte à limiter l'élargissement des impulsions. Une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont importants. Enfin, il est aussi intéressant de limiter la pente de dispersion chromatique sur la plage du multiplex.

Il a été proposé d'utiliser des fibres à compensation de dispersion (DCF, acronyme de "dispersion compensating fiber"), pour corriger la dispersion chromatique induite par la fibre de ligne. De telles fibres présentent les inconvénients suivants:
- atténuation élevée dans la plage de longueur d'onde utilisée, de l'ordre de 0,5 dB/km;
- sensibilité au conditionnement élevée, qui induit des atténuations fortes lorsque la fibre est enroulée sur de petits diamètres;
- forte non-linéarité.

Il existe donc pour les systèmes de transmission à multiplexage en longueur d'onde un problème de gestion de la dispersion chromatique, de sorte à assurer
- une dispersion chromatique cumulée faible sur la liaison;
- une dispersion chromatique suffisamment élevée pour limiter les effets non-linéaires au voisinage des longueurs d'onde du multiplex;
- une atténuation faible dans la plage de longueur d'onde du multiplex;
- une faible sensibilité au conditionnement.

Richard Lundin, Dispersion Flattening in a W fiber, Applied Optics vol. 33 no 6, pp. 1011-1014 (1994) décrit un procédé permettant d'obtenir une dispersion plate dans des fibres monomodes à double gaine. Le procédé est appliqué aux fibres présentant un profil d'indice en W - rectangle et anneau d'indice inférieur à celui de la gaine - et permet d'obtenir une valeur quadratique moyenne de la dispersion de 0,9 ps/km.nm dans la plage de longueurs d'ondes de 1250 nm à 1600 nm, avec une longueur d'onde de coupure de 1250 nm. Ce document indique simplement que le fait de maintenir à un niveau faible la dispersion chromatique permet de limiter l'élargissement des impulsions.

Y. Li et C.D. Hussey, Triple-clad single mode fibers for dispersion flattening, Optical Engineering, vol. 33 no 12, pp. 3999-4005 (1994) décrit l'intérêt des fibres à dispersion plate pour les systèmes de transmission à multiplexage en longueur d'onde, avec une annulation de la dispersion chromatique à 1300 et 1550 nm. Ce document propose une optimisation des fibres à triple gaine pour obtenir une dispersion plate, avec des zéros de dispersion chromatique à 1300 et 1550 nm, des pertes intrinsèques faibles, et une bonne sensibilité à la courbure. La longueur d'onde de coupure pour le second mode est à 1250 nm. Les fibres obtenues présentent un coeur d'indice supérieur à celui de la gaine externe, une première gaine d'indice inférieur à celui de la gaine externe, et une deuxième gaine d'indice supérieur à celui de la gaine externe. Les pertes induites par un enroulement de la fibre sur un rayon de 5 cm sont inférieures à 2,4 dB/km, et la dispersion est inférieure à 3 ps/nm.km dans la plage de longueur d'onde entre 1300 et 1550 nm.

P.K. Bachmann, Worldwide status of dispersion-modified single mode fibres, Philips J. Res.42, 435-450, (1987) propose une revue des fibres à dispersion plate et à dispersion décalée (DSF). L'auteur conclut sur la nécessité de diminuer les pertes induites par courbure des fibres.

La demanderesse commercialise sous la référence ASMF 200 une fibre monomode à saut d'indice présentant une longueur d'onde d'annulation de la dispersion chromatique entre 1300 et 1320 nm, et une dispersion chromatique de 3,5 ps/nm.km dans une plage de 1285-1330 nm, et de 18 ps/nm.km à 1550 nm.

L'invention propose une solution au problème de la gestion de la dispersion chromatique dans les systèmes de transmission à multiplexage de longueur d'onde. Elle assure une bonne transmission à multiplexage en longueur d'onde, sans induire d'atténuation importante, et en limitant les effets non-linéaires. Elle fournit ainsi une solution au problème de la compensation de la dispersion dans les systèmes de transmission à multiplexage en longueur d'ondes, en permettant de compenser la dispersion chromatique sur une liaison, sans induire d'atténuation importante, et en évitant autant que possible l'usage de fibres de compensation de dispersion chromatique.

L'invention s'applique à des systèmes de transmissions en multiplex de longueur d'onde à impulsions de toute nature, et notamment à impulsions RZ ou NRZ.

Plus précisément, l'invention propose un système de transmission à fibre optique à multiplexage en longueur d'onde, comprenant au moins une section de fibre monomode à faible pente, et au moins une section de fibre monomode à saut d'indice, caractérisé en ce que la fibre monomode à faible pente est une fibre à dispersion plate qui présente deux zéros de dispersion chromatique, en dehors de la bande du multiplex de longueur d'onde.

De préférence, la fibre à dispersion plate présente un zéro de dispersion chromatique dans la plage de 1350 à 1450 nm.

Dans un mode de réalisation, la fibre à dispersion plate présente un zéro de dispersion chromatique dans la plage de 1550 à 1650 nm.

Dans un mode de réalisation, la fibre à dispersion plate présente une dispersion chromatique comprise en valeur absolue entre 3 et 5,5 ps/nm.km dans une plage de longueur d'onde de 1530 à 1600 nm.

De préférence, la fibre à dispersion plate présente une pente de dispersion chromatique inférieure en valeur absolue à 0,04 ps/nm².km dans une plage de longueur d'onde de 1530 à 1600 nm.

Dans un mode de réalisation, la fibre à saut d'indice est choisie de sorte à compenser la dispersion chromatique dans la fibre à dispersion plate.

De préférence, la fibre à saut d'indice présente une dispersion chromatique supérieure en valeur absolue à 15 ps/nm.km à 1550 nm.

Elle peut aussi présenter une dispersion chromatique supérieure en valeur absolue à 13,5 ps/nm.km à 1550 nm.

D'autres caractéristiques et avantages de l'invention apparaîtront à la lecture de la description qui suit de modes de réalisation de l'invention, donnée à titre d'exemple uniquement.

L'invention propose d'utiliser dans un système de transmission à multiplexage en longueur d'onde une fibre de ligne à faible pente, et de compenser la dispersion cumulée sur la fibre de ligne par de la fibre à saut d'indice. Elle s'applique tout particulièrement aux systèmes du type DWDM (acronyme de l'anglais "dense wavelength division multiplexing"), dans lesquels l'intervalle entre les canaux du multiplex est inférieur à 1,6 nm.

La fibre à faible pente est selon l'invention une fibre à dispersion plate, qui peut être du type de celles mentionnées dans les documents Lundin, Li et Bachmann cités plus haut. Plus généralement, on peut utiliser selon l'invention une fibre qui présente dans la bande des canaux du multiplex une dispersion chromatique en valeur absolue comprise entre 3 et 5 ps/nm.km. La bande des canaux du multiplex correspond à des longueurs d'ondes entre 1530 et 1600 nm. La borne inférieure de la dispersion assure que la dispersion chromatique dans la fibre est suffisamment élevée pour limiter les effets non-linéaires, et notamment le mélange à quatre ondes. La borne supérieure assure qu'il est possible de compenser la dispersion chromatique sur la liaison en utilisant simplement de la fibre à saut d'indice.

De telles valeurs de dispersion chromatique sont atteintes avec des fibres à dispersion plate. Dans ce cas, la dispersion entre les zéros présente approximativement l'allure d'une parabole, dont le sommet peut correspondre à une valeur positive ou négative de dispersion chromatique. L'invention s'applique dans un cas comme dans l'autre.

Avantageusement, la pente de dispersion chromatique dans la bande des canaux du multiplex est inférieure en valeur absolue à 0,04 ps/nm².km. Une telle valeur assure que la variation de dispersion chromatique entre les différents canaux du multiplex reste faible. Dans le cas d'une fibre à dispersion plate, on peut choisir les valeurs des zéros de la dispersion de sorte que la pente de dispersion dans la bande du multiplex soit négative, autrement dit que le maximum de dispersion soit atteint pour des valeurs de longueurs d'onde inférieures aux longueurs d'onde des canaux du multiplex. Dans ce cas, on peut avantageusement compenser à l'aide de la fibre à saut d'indice la pente de la dispersion chromatique. Une valeur de pente de dispersion chromatique inférieure à - 0,04 ps/nm².km serait alors possible.

Même si l'on choisit la fibre à dispersion plate de telle sorte que la pente de dispersion soit positive dans la plage de longueur d'onde des canaux du multiplex, le choix de valeurs de pente en valeur absolue inférieure à cette borne permet d'éviter de compenser les variations de la dispersion sur la plage de longueur d'onde des canaux du multiplex. En effet des valeurs de pente en valeur absolue inférieure à 0,04 ps/nm².km n'induiraient pas une valeur de dispersion chromatique supérieure à 1200 ps/nm sur une liaison de 600 km. Une telle valeur resterait acceptable.

Les autres caractéristiques de propagation de la fibre à faible pente peuvent être choisies dans les plages de valeurs classiques, par exemple:
- atténuation inférieure à 0,25 dB/km à 1550 nm;
- pertes par courbure inférieures à 0,5 dB/km pour un enroulement autour d'un rayon de 30 mm;
- aire effective de l'ordre de 50 µm².

Pour compenser la dispersion chromatique cumulée dans la fibre à dispersion plate, l'invention propose d'utiliser une fibre à saut d'indice. Une telle fibre peut être du type de la fibre ASMF de la demanderesse, dans laquelle le coeur de la fibre est dopé au Germanium; on peut aussi utiliser une fibre d'un autre type, comme par exemple une fibre coeur de silice, dans laquelle le coeur de fibre n'est pas dopée, mais la gaine est fortement dopée au fluor. Le choix du signe de la dispersion chromatique est effectué de sorte à compenser la dispersion chromatique cumulée dans la fibre à faible pente.

L'invention propose plus généralement que la fibre à saut d'indice présente une valeur de dispersion chromatique à 1550 nm supérieure en valeur absolue à 15 ps/nm.km; on pourrait aussi considérer une borne inférieure de 13,5 ps/nm.km sur la plage du multiplex; le choix d'une dispersion chromatique en valeur absolue supérieure à ces valeurs permet d'assurer la compensation de la dispersion chromatique cumulée dans la fibre de ligne à dispersion plate par de la fibre à saut d'indice.

L'utilisation d'une fibre à saut d'indice pour la compensation de la dispersion permet d'éviter d'utiliser des fibres à compensation de dispersion comme dans les systèmes de l'art antérieur. On peut ainsi garantir une faible atténuation, une grande aire effective, une faible valeur du coefficient de non-linéarité n₂, ainsi que les autres avantages de la fibre à saut d'indice.

On donne maintenant un exemple de réalisation de l'invention. Dans cet exemple, le système de transmission comprend des sections de fibre à dispersion plate présentant à 1550 nm une dispersion chromatique de - 3 ps/nm.km, et une pente de dispersion chromatique pour la même valeur de longueur d'onde de - 0,03 ps/nm².km. On utilise pour cela une fibre à dispersion plate, dont le sommet du graphe de la dispersion en fonction de la longueur d'onde est négatif, en plaçant le sommet du graphe à une longueur d'onde inférieure à la plage de longueur d'onde des canaux du multiplex. On utilise des sections de fibre à dispersion plate de 100 km.

On utilise en outre des sections de fibre à saut d'indice du type commercialisé par la demanderesse sous la référence ASMF 200, avec une dispersion de 17 ps/nm.km à 1550 nm, et une pente de dispersion de + 0,055 ps/nm².km; chaque section présente une longueur de 20 km.

Dans ce cas, on obtient après des tronçons de 100 + 20 km de propagation les valeurs cumulées suivantes de dispersion pour différentes valeurs de longueurs d'ondes:

| à 1530 nm: | |
|---|---|
| fibre à dispersion plate | - 240 |
| fibre à saut d'indice | + 318 |
| DC totale | + 78 |

| à 1550 nm: | |
|---|---|
| f fibre à dispersion plate | - 300 |
| fibre à saut d'indice | + 340 |
| DC totale | + 40 |

| à 1580 nm: | |
|---|---|
| fibre à dispersion plate | - 390 |
| fibre à saut d'indice : | + 372 |
| DC totale | - 22 |

| à 1600 nm: | |
|---|---|
| fibre à dispersion plate : | - 450 |
| fibre à saut d'indice | + 392 |
| DC totale | - 58 |

Les valeurs de dispersion chromatique totale obtenues permettent des transmissions sur un multiplex entre 1530 nm et 1600 nm, sur un système d'une longueur totale de 600 km. Dans un tel cas, la dispersion cumulée reste inférieure à 500 ps/nm en valeur absolue, et ce quel que soit le canal utilisé.

Les fibres utilisées selon l'invention peuvent facilement être fabriquée par l'homme du métier à l'aide de techniques connues, comme le MCVD ou les autres techniques couramment utilisées pour la fabrication des fibres optiques.

## Revendications

1. Système de transmission à fibre optique à multiplexage en longueur d'onde, comprenant au moins une section de fibre monomode à faible pente de dispersion, et au moins une section de fibre monomode à saut d'indice, **caractérisé en ce que** la fibre monomode à faible pente est une fibre à dispersion plate qui présente deux zéros de dispersion chromatique, en dehors de la bande du multiplex de longueurs d'onde.

2. Système selon la revendication 1, tel que la fibre à dispersion plate présente un zéro de dispersion chromatique dans la plage de 1350 à 1450 nm.

3. Système selon l'une des revendications 1 ou 2 tel que la fibre à dispersion plate présente un zéro de dispersion chromatique dans la plage de 1550 à 1650 nm.

4. Système selon l'une des revendications 1 à 3 tel que la fibre à dispersion plate présente une dispersion chromatique comprise en valeur absolue entre 3 et 5,5 ps/nm.km dans une plage de longueur d'onde de 1530 à 1600 nm.

5. Système selon l'une des revendications 1 à 4 tel que la fibre à dispersion plate présente une pente de dispersion chromatique inférieure en valeur absolue à 0,04 ps/nm².km dans une plage de longueur d'onde de 1530 à 1600 nm.

6. Système selon l'une des revendications 1 à 5 tel que la fibre à saut d'indice est choisie de sorte à compenser la dispersion chromatique dans la fibre à dispersion plate.

7. Système selon l'une des revendications 1 à 6 tel que la fibre à saut d'indice présente une dispersion chromatique supérieure en valeur absolue à 15 ps/nm.km à 1550 nm.

8. Système selon l'une des revendications 1 à 6, **caractérisé en ce que** la fibre à saut d'indice présente une dispersion chromatique supérieure en valeur absolue à 13,5 ps/nm.km à 1550 nm.

## Patentansprüche

1. Faseroptisches Übertragungssystem mit Wellenlängenmultiplexing, welches wenigstens einen Monomodefaserabschnitt mit geringer Dispersionssteigung und wenigstens einen Monomodefaserabschnitt mit Indexsprung umfasst, **dadurch gekennzeichnet, dass** die Monomodefaser mit geringer Dispersionssteigung eine Faser mit flacher Dispersion ist, welche zwei Nullstellen der chromatischen Dispersion außerhalb des Bands des Wellenlängenmultiplex aufweist.

2. System nach Anspruch 1, bei welchem die Faser mit flacher Dispersion eine Nullstelle der chromatischen Dispersion im Bereich von 1350 bis 1450 nm aufweist.

3. System nach Anspruch 1 oder 2, bei welchem die Faser mit flacher Dispersion eine Nullstelle der chromatischen Dispersion im Bereich von 1550 bis 1650 nm aufweist.

4. System nach einem der Ansprüche 1 bis 3, bei welchem die Faser mit flacher Dispersion einen Absolutwert der chromatischen Dispersion zwischen 3 und 5,5 ps/nm·km in einem Wellenlängenbereich von 1530 bis 1600 nm aufweist.

5. System nach einem der Ansprüche 1 bis 4, bei welchem die Faser mit flacher Dispersion einen Absolutwert der Steigung der chromatischen Dispersion unterhalb von 0,04 ps/nm²·km in einem Wellenlängenbereich von 1530 bis 1600 nm aufweist.

6. System nach einem der Ansprüche 1 bis 4, bei welchem die Faser mit Indexsprung derart gewählt ist, dass die chromatische Dispersion in der Faser mit flacher Dispersion kompensiert ist.

7. System nach einem der Ansprüche 1 bis 6, bei welchem die Faser mit Indexsprung einen Absolutwert der chromatischen Dispersion oberhalb von 15 ps/nm·km bei 1550 nm aufweist.

8. System nach einem der Ansprüche 1 bis 6, **dadurch gekennzeichnet, dass** die Faser mit Indexsprung einen Absolutwert der chromatischen Dispersion oberhalb von 13,5 ps/nm·km bei 1550 nm aufweist.

## Claims

1. A WDM optical fiber transmission system comprising at least one shallow dispersion-slope monomode fiber section and at least one step index monomode fiber section, the system being **characterized in that** the shallow slope monomode fiber is a flat dispersion fiber having two chromatic dispersion zeroes outside the band of the wavelength multiplex.

2. A system according to claim 1, in which the flat dispersion fiber has a chromatic dispersion zero in the range 1350 nm to 1450 nm.

3. A system according to claim 1 or 2, in which the flat dispersion fiber has a chromatic dispersion zero in the range 1550 nm to 1650 nm.

4. A system according to any one of claims 1 to 3, in which the flat dispersion fiber has chromatic dispersion whose absolute value lies in the range 3 ps/nm.km to 5.5 ps/nm.km over a wavelength range of 1530 nm to 1600 nm.

5. A system according to any one of claims 1 to 4, in which the flat dispersion fiber has chromatic dispersion slope whose absolute value is less than 0.04 ps/nm².km over the wavelength range 1530 nm to 1600 nm.

6. A system according to any one of claims 1 to 5, in which the step index fiber is selected to compensate the chromatic dispersion in the flat dispersion fiber.

7. A system according to any one of claims 1 to 6, in which the step index fiber has chromatic dispersion whose absolute value is greater than 15 ps/nm.km at 1550 nm.

8. A system according to any one of claims 1 to 6, **characterized in that** the step index fiber has chromatic dispersion whose absolute value is greater than 13.5 ps/nm.km at 1550 nm.
